# FASCICULE DE BREVET EUROPEEN

(11) **EP 1 170 597 B1**
(45) Date de publication et mention de la délivrance du brevet: **25.07.2007**
(21) Numéro de dépôt: 00202336.4
(22) Date de dépôt: 04.07.2000
(51) Int. Cl.: G01S 1/04

(54) **Récepteur GPS basse puissance avec redistribution de tâches de synchronisation**
Leistungsarmer GPS Empfänger mit Umverteilung der Synchronisationsaufgaben
Low power GPS receiver with redistribution of synchronisation tasks

(43) Date de publication de la demande: 09.01.2002
(73) Titulaire: ASULAB S.A., CH-2501 Bienne (CH)
(72) Inventeur: Farine, Pierre-André, 2000 Neuchâtel (CH); Etienne, Jean-Daniel, 2206 Les Geneveys-sur-Coffrane (CH); Riem-Vis, Ruud, 2000 Neuchâtel (CH); Firouzi, Elham, 2514 Ligerz (CH)
(74) Mandataire: Laurent, Jean

(56) Documents cités:
- WO-A-99/63360
- US-A- 6 018 704
- US-A- 6 028 887

## Description

L'invention concerne un récepteur GPS basse puissance avec redistribution de tâches de synchronisation. Le récepteur GPS basse puissance comprend notamment une antenne de réception de signaux radiofréquences provenant de satellites, un étage de réception et de mise en forme de signaux radiofréquences fournis par l'antenne, un étage de corrélation composé de plusieurs canaux qui comprennent chacun un corrélateur, ledit étage de corrélation recevant des signaux intermédiaires mis en forme par l'étage de réception, un microprocesseur relié à l'étage de corrélation et destiné à calculer des données de position en X, Y et Z, de vitesse et temporelles en fonction des données tirées, après corrélation, des signaux GPS émis par les satellites. Les données tirées des signaux GPS sont notamment le message GPS et les pseudo-distances.

Actuellement, 24 satellites sont placés en orbite à une distance proche de 20'200 Km au-dessus de la surface de la Terre sur 6 plans orbitaux décalés chacun de 55° par rapport à l'équateur. Le temps mis par un satellite pour accomplir une rotation complète en orbite afin de se retrouver au même point au-dessus de la Terre est environ de 12h. La répartition des satellites en orbite permet à un récepteur GPS terrestre de recevoir les signaux GPS d'au moins quatre satellites visibles pour déterminer sa position, sa vitesse et l'heure locale par exemple.

Pour l'émission des signaux radiofréquences, chaque satellite comprend une horloge atomique cadencée à une fréquence de 10,23 MHz afin de fournir des données temporelles précises à des récepteurs GPS terrestres. Des stations de contrôle terrestres permettent de corriger certaines données du satellite au besoin, par exemple au niveau de son information horaire et de l'information orbitale.

Chacun de ces satellites émet des signaux radiofréquences composés d'une première fréquence porteuse L1 à 1,57542 GHz sur laquelle sont modulés le P-code à 10,23 MHz et le C/A code PRN à 1,023 MHz propre à chaque satellite avec le message GPS à 50 Hz qui contient les données d'éphémérides et d'almanachs utiles notamment pour le calcul de la position, et d'une seconde fréquence porteuse L2 à 1,2276 GHz sur laquelle sont modulés le P-code à 10,23 MHz avec le message GPS à 50 Hz. Dans des applications civiles, uniquement la fréquence porteuse L1 avec le C/A code est utilisée par les récepteurs terrestres pour le calcul selon le message GPS de la position en X, Y et Z, de la vitesse et du temps.

Le C/A code PRN (pseudo random noise) de chaque satellite, qui est appelé également le code de Gold, est un code pseudo-aléatoire unique pour chaque satellite de manière à pouvoir différencier les signaux émis par les satellites à l'intérieur du récepteur. Tous les codes de Gold ont la caractéristique d'être orthogonaux, c'est-à-dire qu'en les corrélant l'un avec l'autre le résultat de la corrélation donne une valeur proche de 0. Cette caractéristique permet de pouvoir indépendamment traiter plusieurs signaux radiofréquences provenant de plusieurs satellites de façon simultanée dans plusieurs canaux d'un même récepteur GPS.

Ce C/A code est un signal numérique qui est composé de 1023 chips et qui se répète toutes les millisecondes. Cette période de répétition est définie également par le terme epoch du code de Gold. Il est à noter qu'un chip prend des valeurs 1 ou 0 comme pour un bit. Toutefois, un chip (terme utilisé dans la technique GPS) est à différencier d'un bit qui est utilisé pour définir une unité d'information.

Les codes de Gold sont définis pour 32 numéros d'identification de satellites ce qui laisse encore libre choix du code spécifique attribué pour chaque autre satellite qui sera mis en orbite sur un des plans orbitaux.

Dans le récepteur GPS au niveau de l'étage de corrélation, un générateur de C/A code produit une réplique connue d'un C/A code de satellite par une séquence de 1023 chips différents pour chaque établissement de prise de phase pour l'acquisition d'un satellite. Les chips codes sont décalés dans le temps dans une implémentation à registres à décalage en orientant l'horloge qui commande lesdits registres à décalage.

Dans plusieurs secteurs d'activité, l'emploi de récepteurs GPS portables ou incorporés dans d'autres dispositifs de plus grande dimension a permis de fournir aux utilisateurs des données de navigation facilitant notamment leur orientation et leur connaissance du lieu qu'ils occupent. On peut citer notamment l'emploi de récepteurs GPS incorporés dans le tableau de bord de véhicules routiers et en coopération avec des données cartographiques mémorisées pour pouvoir indiquer un chemin à un conducteur dudit véhicule.

La réduction en taille des récepteurs GPS est devenue une nécessité de manière à pouvoir les incorporer dans des objets aisément transportables par une seule personne désireuse de connaître sa position et sa vitesse en tout endroit de manière relativement précise. Avec cette réduction en taille de ces récepteurs alimentés par des batteries, il a dû être imaginé également des constructions garantissant une certaine économie en énergie consommée par lesdits récepteurs d'où la réalisation de récepteurs basse puissance.

Bien entendu, les exigences de consommation sont dépendantes de la capacité de la batterie d'alimentation à fournir de l'énergie aux récepteurs GPS lors du traitement des signaux radiofréquences reçus. Plus cette batterie est petite en fonction de l'objet portable dans lequel le récepteur est monté, et plus il est nécessaire de concevoir les blocs électroniques des circuits intégrés du récepteur GPS en taille réduite, ainsi que la manière dont les signaux sont traités dans lesdits circuits pour tirer le message GPS et les pseudo-distances de chaque satellite capté.

Comme il est envisagé de monter des récepteurs GPS dans des objets portables, tels que des téléphones cellulaires ou également dans des montres-bracelets, les circuits intégrés doivent être conçus de manière que leur consommation ne soit pas trop importante afin d'éviter de devoir changer trop fréquemment la pile ou la batterie de l'objet ou de devoir exécuter une recharge systématique à brève échéance d'un accumulateur d'énergie.

Dans le cas d'un montage dans une montre-bracelet, il est imposé une réduction de taille non seulement de la plaquette portant les circuits intégrés de traitement des signaux reçus, mais également celle de l'antenne et de l'accumulateur dans la mesure du possible. Une réduction de la consommation peut être atteinte en diminuant la taille de la technologie notamment pour la réalisation des circuits intégrés du corrélateur et du calcul par microcontrôleur. Une technologie CMOS de 0,5 µm peut être utilisée par exemple, ou dans un proche avenir avec une technologie CMOS de 0,18 µm tout en garantissant un bon fonctionnement à haute fréquence. De plus, une optimisation de l'algorithme de traitement des signaux GPS du microprocesseur mis en oeuvre dans le corrélateur peut encore réduire la consommation du récepteur.

Plusieurs réalisations de récepteurs basse puissance ont déjà fait l'oeuvre de brevets dans le but d'économiser au maximum l'énergie consommée par le récepteur lors de son fonctionnement. On peut citer par exemple le brevet US 5,650,785 de l'entreprise Trimble Navigation Limited qui concerne un récepteur GPS à basse puissance. Ce récepteur comprend notamment une section RF à division de fréquence et quantification des signaux GPS pour l'étage de corrélation, et un dispositif à microcontrôleur qui commande un modulateur de tension d'alimentation. Ce modulateur de tension d'alimentation est utilisé pour désactiver la section RF pendant une période de temps inférieure au temps nécessaire pour corréler les signaux GPS afin de réduire au maximum la consommation de cette section RF gourmande en énergie tout en laissant opérationnel l'étage de corrélation.

La tendance actuelle pour augmenter la vitesse de traitement des signaux tout en essayant d'économiser de l'énergie, étant donné le transfert important de données qui doit se faire entre le corrélateur et le microprocesseur, est de munir le récepteur d'un microprocesseur 32-bit. Cependant, cette amélioration des capacités du récepteur avec de tels microprocesseurs a l'inconvénient d'avoir un échange important de données entre ledit microprocesseur et le démodulateur ou corrélateur, cet échange se faisant par ailleurs à une fréquence dépassant le kHz.

Pour se fixer un ordre de grandeur de la consommation actuelle de récepteurs GPS basse puissance, on peut prendre exemple sur la réalisation du récepteur GPS dénommé ACE III GPS de l'entreprise Trimble Navigation Limited. Ce récepteur a une architecture à 8 canaux qui est le plus rapide dans le but d'économiser de l'énergie et garantissant une meilleure fiabilité. La dimension de la carte avec les composants est de 8,26 cm x 4,65 cm x 1,15 cm. La puissance consommée est plus petite que 0,5 W sans tenir compte de la consommation de l'amplificateur de l'antenne. Ce dispositif récepteur GPS est utilisé pour la navigation, la poursuite (localisation), la collecte de données ou autres applications dans lequel le dispositif est alimenté par batterie. Ce récepteur comprend 32 corrélateurs.

Un premier circuit intégré est le RF/IF convertisseur de fréquence destiné à envoyer l'information mise en forme à l'étage de corrélation, dans lequel il y a un passage à une fréquence intermédiaire afin de réduire entre autres la consommation sans dégrader la qualité du signal reçu. Un second circuit intégré recevant le signal intermédiaire est le GPS DSP dont le microprocesseur est du type 32-bit. La puissance consommée de ce récepteur est de l'ordre de 0,5 W pour une tension ne dépassant pas 3,5 V. Même avec une telle consommation relativement faible, ce récepteur est difficilement en mesure de pouvoir équiper par exemple une montre ou un téléphone portable dotés d'un faible accumulateur d'énergie ou d'une pile.

Si un calcul en temps réel est souhaité, cela requiert une puissance de calcul importante qui ne peut être faite qu'au moyen de gros microprocesseurs ou de gros calculateurs, notamment avec des microprocesseurs à 32-bit.

Un but que se propose de résoudre l'objet de l'invention consiste à réaliser un récepteur GPS basse puissance susceptible de réduire au maximum la consommation d'énergie de manière que l'accumulateur ou la pile dudit objet ne se décharge pas trop rapidement tout en se démarquant des réalisations des dispositifs récepteurs GPS de l'art antérieur.

Un autre but que se propose de résoudre l'objet de l'invention consiste à pouvoir intégrer tous les composants du récepteur GPS à l'intérieur du boîtier d'une montre afin d'être alimenté par un accumulateur d'énergie ou une pile.

Ces buts, ainsi que d'autres sont atteints par le récepteur GPS basse puissance cité ci-devant qui se caractérise en ce que, dans chaque canal, un contrôleur, comprenant un algorithme de traitement de signaux numériques, est associé au corrélateur pour permettre lors de la mise en fonction du canal d'opérer de manière autonome toutes les tâches de synchronisation pour la recherche et la poursuite d'un satellite, et en ce qu'au moins un ensemble de registres d'entrée et de sortie de données est placé en interface entre l'étage de corrélation et le microprocesseur afin de recevoir des données émises par le microprocesseur à destination de l'étage de corrélation et des données fournies de l'étage de corrélation, lesdites données transitant par l'ensemble de registres étant composées de signaux d'une fréquence inférieure ou égale à la fréquence des signaux de messages GPS pour que le microprocesseur puisse s'occuper des tâches de calcul de la position, de vitesse et de temps sans intervention au niveau des tâches de synchronisation et de corrélation.

Ces buts, ainsi que d'autres sont également atteints par une montre comprenant un tel récepteur GPS qui se caractérise en ce que le récepteur GPS est logé dans le boîtier de la montre et est alimenté par un accumulateur d'énergie ou par une pile servant également à l'alimentation des composants électroniques des fonctions horlogères.

Un avantage du récepteur GPS est qu'une partie importante de l'algorithme du traitement des signaux numériques, dénommé algorithme DSP, est placée à l'aide d'un matériel dédicacé dans l'étage de corrélation. Cela permet ainsi de redistribuer ces tâches logicielles qui étaient consacrées préalablement à un microprocesseur de 32-bit ou supérieur dans ledit étage de corrélation. Le microprocesseur n'est donc occupé que pour réaliser des tâches de calcul selon les messages GPS d'au moins quatre satellites tirés des signaux radiofréquences reçus. Il est même proposé d'implanter tout l'algorithme dans un contrôleur placé dans l'étage de corrélation. La synchronisation est ainsi réalisée en logique câblée à l'extérieur du microprocesseur utilisé pour le calcul final. Une architecture à bits parallèles est donc prévue dans chaque canal avec un contrôle de chaque étape de corrélation dans les boucles d'asservissement.

Comme il n'y a plus un transfert de données très important entre le corrélateur et le microprocesseur et que ce transfert n'a plus besoin de se faire très rapidement, on peut utiliser un microprocesseur 8-bit uniquement. Le microprocesseur n'est donc occupé que pour des calculs à basses fréquences avec des signaux numériques entre 50 Hz à 2 Hz pour la navigation d'où une économie d'énergie. Bien entendu, l'étage corrélateur doit comprendre des éléments de mémoire, une unité arithmétique, une unité de commande du corrélateur et une unité de synchronisation des bits de données pour l'exécution des différentes étapes de synchronisation et de corrélation proprement dite.

Auparavant, les tâches logicielles faites au préalable dans le microprocesseur en communication avec l'étage de corrélation se faisait à une fréquence de l'ordre du kHz. Donc à chaque fois un transfert d'informations à cette fréquence devait être réalisé. Maintenant, comme l'algorithme agissant sur les boucles d'asservissement du corrélateur a été transféré dans chacun des 12 canaux sous forme d'une logique câblée tous les calculs de synchronisation aux fréquences supérieures au kHz sont pratiquées dans l'étage de corrélation. Il n'y a plus que des données de transfert à 50 Hz passant par des registres tampons en interface entre l'étage de corrélation et le microprocesseur maître, ce qui permet d'économiser une importante quantité d'énergie.

Avec cette nouvelle redistribution de ces tâches logicielles, la consommation en énergie du récepteur est grandement diminuée d'où une intégration possible dans une montre. A titre comparatif, le récepteur GPS de la présente invention est prévu avec une consommation de l'ordre de 100 mW à une tension d'alimentation inférieure ou égale à 3 V, et tend à être amenée à une puissance de l'ordre de 50 mW dans un proche avenir. Le récepteur GPS avec tous ses composants placés sur un circuit imprimé a un encombrement proche de 8 cm³.

Les fréquences d'horloge utilisées dans le récepteur sont adaptées en fonction des fréquences des signaux radiofréquences reçus afin de cadencer plusieurs parties de manière identique ce qui a pour conséquence de réduire également le nombre d'éléments électroniques notamment dans l'étage de corrélation et par voie de conséquence la consommation du récepteur. De plus, une diminution de consommation est accomplie en pratiquant une conversion ou compression de fréquence des signaux radiofréquences à destination de l'étage de corrélation.

Le microprocesseur peut être utilisé quand au moins trois ou quatre satellites ont été détectés afin de réduire toute consommation inutile, étant donné que chaque canal de l'étage de corrélation peut coordonner de manière autonome les opérations de recherche et de poursuite du satellite détecté.

Les buts, avantages et caractéristiques du récepteur GPS basse puissance avec redistribution de tâches logicielles au niveau de l'étage de corrélation apparaîtront mieux dans la description suivante de formes d'exécution illustrées par les dessins sur lesquels :
- la figure 1 représente de manière schématique l'ensemble des éléments constituant le récepteur GPS selon l'invention,
- la figure 2 représente le corrélateur d'un canal pour l'adaptation de la réplique du C/A code et de la réplique de la fréquence de la porteuse du récepteur GPS selon l'invention,
- la figure 3 représente un graphique des incréments d'adaptation de la fréquence porteuse et du C/A code des canaux selon deux dimensions pour l'acquisition et la poursuite des satellites visibles,
- la figure 4 représente un organigramme des opérations de recherche et de poursuite des satellites du récepteur GPS selon l'invention, et
- la figure 5 représente une montre-bracelet équipée d'un récepteur GPS selon l'invention.

Dans la description suivante, plusieurs éléments du récepteur GPS qui sont bien connus de l'homme du métier dans ce domaine technique ne seront relatés que de manière simplifiée, l'accent étant mis spécialement sur la redistribution des tâches logicielles notamment de synchronisation au préalable dans le microprocesseur au niveau de l'étage de corrélation.

Le récepteur GPS basse puissance est de préférence destiné à équiper une montre-bracelet afin de fournir au besoin des données de position, de vitesse et de l'heure locale au porteur de la montre. Comme la montre possède un accumulateur ou une pile de petite taille, la puissance consommée doit être la plus faible possible lors du fonctionnement du récepteur GPS. C'est pour ces raisons qu'il a été prévu de répartir les tâches essentiellement de synchronisation concernant l'acquisition et la poursuite des satellites au niveau de l'étage de corrélation et non plus dans le microprocesseur comme il sera expliqué de manière plus détaillée dans la description qui suit.

Bien entendu, le récepteur GPS pourrait équiper d'autres objets portables de petite taille qui sont munis d'un accumulateur d'énergie ou d'une pile au même titre que la montre citée ci-dessus, par exemple pour un téléphone portable.

Lors du montage du récepteur GPS dans un boîtier d'une montre-bracelet, il doit être tenu compte également de la dimension de l'antenne. Il faut savoir qu'une réduction de la taille de l'antenne, ainsi que du plan de masse sur lequel elle est montée, a comme conséquence une diminution du motif du gain, par les pertes du rapport signal sur bruit (SNR). Plusieurs efforts se sont concentrés sur l'amélioration de l'acquisition du signal et sur les algorithmes de poursuite lesquels permettent de compenser les pertes du rapport signal sur bruit pour ledit récepteur.

Le transfert de données avec le microprocesseur ne se fait plus pendant toutes les étapes de corrélation. Ce n'est que le résultat de la corrélation de chaque canal de l'étage de corrélation qui est transféré au microprocesseur, en particulier les messages GPS à une fréquence de 50 Hz. De ce fait, la forte consommation constatée auparavant lors de l'échange d'informations ou de paramètres entre le microprocesseur et l'étage de corrélation pendant les phases d'acquisition et de poursuite qui se déroulaient à des fréquences supérieures au kHz a été fortement diminuée.

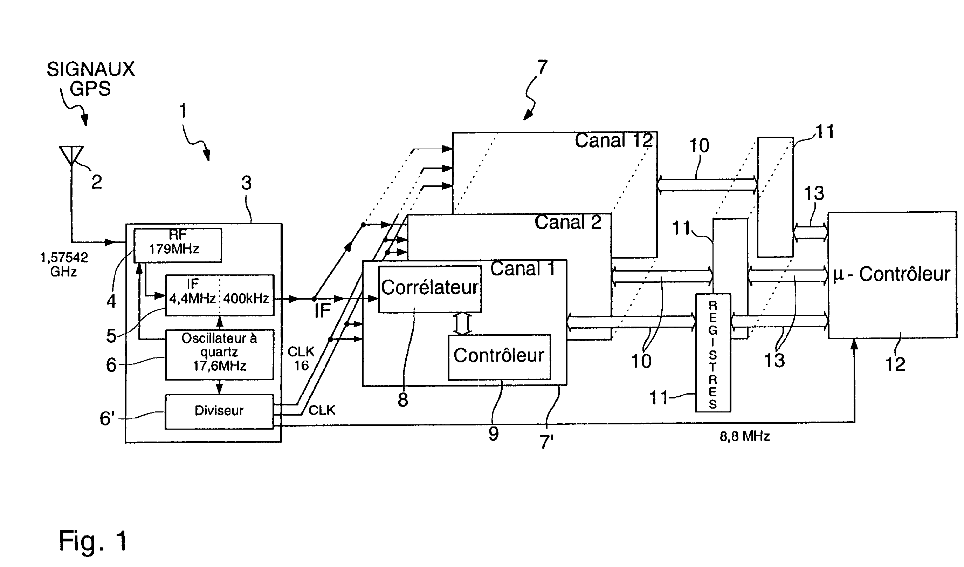

Le récepteur GPS basse puissance 1 est représenté schématiquement à la figure 1. Il se compose d'une antenne 2 pour recevoir des signaux radiofréquences provenant de plusieurs satellites, d'un étage de réception et de mise en forme des signaux radiofréquences 3 fournis par l'antenne 2, d'un étage de corrélation 7 recevant des signaux intermédiaires IF sous forme complexe à une fréquence de l'ordre de 400 kHz de l'étage de mise en forme 3, ledit étage de corrélation étant constitué de 12 canaux 7', un transfert de données 10 reliant chaque canal à un registre tampon 11 respectif, et finalement un bus de données 13 reliant chaque registre tampon à un microprocesseur 12.

Les registres 11 de chaque canal sont susceptibles de recevoir des données ou des paramètres de configuration provenant du microprocesseur ou d'une mémoire qui lui est associée pour le canal de corrélation 7', et est susceptible de transmettre des données concernant les messages GPS, l'état du code PRN, l'incrément de fréquence relatif à l'effet Doppler, les pseudo-distances et autres données après la corrélation et le verrouillage sur un satellite spécifique.

Les registres tampons 11 sont composés de plusieurs sortes de registres qui sont par exemple les registres de commande et d'états, les registres pour les oscillateurs NCO (Numerically Controlled Oscillator) des canaux, les registres de pseudo-distances, les registres d'énergie, les registres d'écart et d'incrément de la porteuse et du code et des registres de test. Il est à noter que ces registres peuvent accumuler des données pendant la phase de corrélation afin d'être utilisées pendant les procédures d'acquisition et de poursuite des satellites sans forcément être transférées automatiquement au microprocesseur.

Dans une variante de réalisation, un unique bloc de registres 11 peut être envisagé pour tous les canaux 7' de l'étage de corrélation, étant donné que certaines données placées dans le bloc de registres sont communes à chaque canal.

Dans l'étage de réception 3, un premier circuit électronique 4 convertit le signal radiofréquence de fréquence 1,57542 GHz en une fréquence de 179 MHz, et un second circuit électronique IF 5 procède à une double conversion pour amener les signaux GPS tout d'abord à une fréquence de 4,8 MHz puis finalement à une fréquence de 400 kHz en échantillonnant à 4,4 MHz afin de fournir un signal intermédiaire complexe IF échantillonné et quantifié à l'étage de corrélation. Ce signal intermédiaire complexe IF est donc composé d'un signal en phase I et d'un signal en quadrature Q.

Les signaux fournis par le premier circuit 4 donne dans la moitié des cas des signaux de parité différente (+1 et -1). Il doit donc être tenu compte de cette parité pour les opérations de démodulation des signaux GPS dans le récepteur.

Dans le cas d'un récepteur GPS basse puissance, il est recommandé de sortir des signaux intermédiaires IF à 1-bit de quantification pour la fréquence de la porteuse, même si cette quantification génère une perte additionnelle de l'ordre de 1 dB sur le rapport du signal sur bruit (SNR).

Pour ces opérations de conversion de fréquence un oscillateur à quartz 6 calibré à une fréquence de l'ordre de 17,6 MHz fait partie de l'étage de réception et de mise en forme des signaux radiofréquences 3. La fréquence de cet oscillateur est augmentée à environ 1,4 GHz pour opérer une multiplication avec les signaux GPS à 1,57542 GHz afin de fournir des signaux convertis à une fréquence de 179 MHz dans le premier circuit RF 4. Le signal d'horloge de l'oscillateur est appliqué au second circuit IF pour pouvoir convertir les signaux GPS tout d'abord à une fréquence de 4,8 MHz et ensuite à la fréquence de 400 kHz. Une division de fréquence d'horloge est pratiquée dans ce second circuit 5 afin de prévoir une fréquence d'échantillonnage des signaux GPS de l'ordre de 4,4 MHz qui est normalement équivalente à la fréquence d'horloge CLK destinée à l'étage de corrélation. Toutefois, il est à noter que la Demanderesse a réalisé le récepteur GPS avec une fréquence d'horloge CLK de 4,36 MHz qui est également divisée par 16 dans l'étage de réception par exemple pour donner une fréquence CLK16 de 272,5 kHz utilisée pour certaines parties de l'étage de corrélation, mais par approximation dans cette description la fréquence CLK est définie égale au 4,4 MHz.

Il est à noter que la fréquence de 4,36 MHz pourrait être beaucoup plus petite, car deux critères définissent cette valeur. Le premier critère est relatif à l'algorithme d'échantillonnage complexe où la largeur de bande du filtre anti-recouvrement limite la fréquence d'horloge à un minimum de 3 MHz. Le deuxième critère est la fréquence d'horloge qui doit être asynchrone avec celles du code PRN (1,023 MHz) et du porteur (400 kHz). En fonction de certains critères de l'étage RF/IF, ladite fréquence d'horloge a été fixée à 4,36 MHz.

Le microprocesseur 12 est dans la présente invention de préférence un microprocesseur 8-bit CooIRISC-816 de EM Microelectronic-Marin SA en Suisse. Ce microprocesseur est cadencé par un signal d'horloge à 4,4 MHz dérivé du signal de 8,8 MHz fourni par le diviseur 6' de l'étage de réception et de mise en forme 3.

Un unique substrat semi-conducteur peut contenir aussi bien l'intégralité de l'étage de corrélation avec les registres et le microprocesseur.

Etant donné que les données transmises par les bus 10 aux registres 11 sont des signaux à une fréquence de 50 Hz, le traitement de ces données, notamment des messages démodulés GPS, peut donc être réalisé par un microprocesseur de petite taille, car ledit microprocesseur 12 n'est occupé principalement que pour les tâches de calcul de la position X, Y et Z, de la vitesse et du temps. Il est à noter que ces calculs n'ont pas besoin d'être effectués en temps réel, c'est pourquoi il est possible d'utiliser un microprocesseur 8-bit tout en gagnant sur la consommation en énergie du récepteur comme les tâches de synchronisation pour l'acquisition et la poursuite des satellites aux fréquences supérieures au kHz sont effectuées de manière autonome par un matériel dédicacé dans au moins quatre canaux 7' de l'étage de corrélation 7.

Chaque canal 7' de l'étage de corrélation 7 comprend un corrélateur 8 et un contrôleur 9 destiné à mettre en fonction par un matériel dédicacé notamment l'algorithme de traitement des signaux pour l'acquisition du signal du satellite et la poursuite du satellite détecté par le canal.

Le contrôleur 9 de chaque canal comprend entre autre une unité à mémoires, une unité arithmétique, une unité de synchronisation des bits de données, une unité de commande du corrélateur et une unité d'interruption non visibles sur la figure 1. L'unité à mémoires est composée notamment d'une mémoire RAM pour enregistrer des données momentanées. La mémoire RAM est répartie dans une structure non régulière ou régulière. L'unité arithmétique réalise notamment des opérations d'addition, de soustraction, de multiplication, d'accumulation et de décalage.

Toutes les tâches d'acquisition et de poursuite des satellites détectés sont donc réalisées de manière autonome dans chaque canal respectif de l'étage de corrélation dans une architecture à bits parallèles où le calcul de plusieurs bits est réalisé en une impulsion d'horloge. Lorsqu'un canal a verrouillé sur un satellite, le circuit synchronise le flux de données GPS destiné aux calculs subséquents.

Comme décrit précédemment plusieurs signaux radiofréquences provenant de plusieurs satellites sont reçus à l'antenne. Puisque leurs C/A codes sont orthogonaux, les canaux peuvent travailler de manière simultanée pour se verrouiller chacun sur un satellite respectif.

Il faut savoir que la position des satellites dans le ciel est connu, ce qui fait qu'il est envisageable d'avoir dans une mémoire du récepteur toutes les informations concernant la position desdits satellites, leur code de Gold, et ceux qui sont susceptibles d'être visibles par le récepteur GPS terrestre au moment de sa mise en fonction.

Les signaux intermédiaires IF fournis à l'étage de corrélation comprennent du bruit qui est de 15 dB supérieur aux signaux utiles, c'est pourquoi il est nécessaire de connaître la forme des signaux que le récepteur doit démoduler. Ceci sert à assurer une corrélation des signaux IF et une démodulation du message GPS pour le microprocesseur une fois que les canaux se sont verrouillés chacun sur un satellite visible respectif.

Dans l'application GPS, les algorithmes DSP sont exécutés à des taux différents de fréquence. Les algorithmes qui sont exécutés à taux de fréquence plus bas, jusqu'au kHz, consistent essentiellement aux fonctions suivantes : commande de la largeur de bande de pré-détection, acquisition du signal, poursuite du signal, détection de blocage, synchronisation des bits, démodulation des données, contrôle de parité et calcul de mesure. Les tâches qui sont exécutées à un taux de fréquence plus élevé, c'est-à-dire supérieur au kHz, sont la commande d'amplification à pré-corrélation, le filtrage du signal de pré-corrélation, l'échantillonnage et la quantification, le retrait du Doppler, la génération de la fréquence porteuse par le NCO, le générateur du code PRN et le corrélateur.

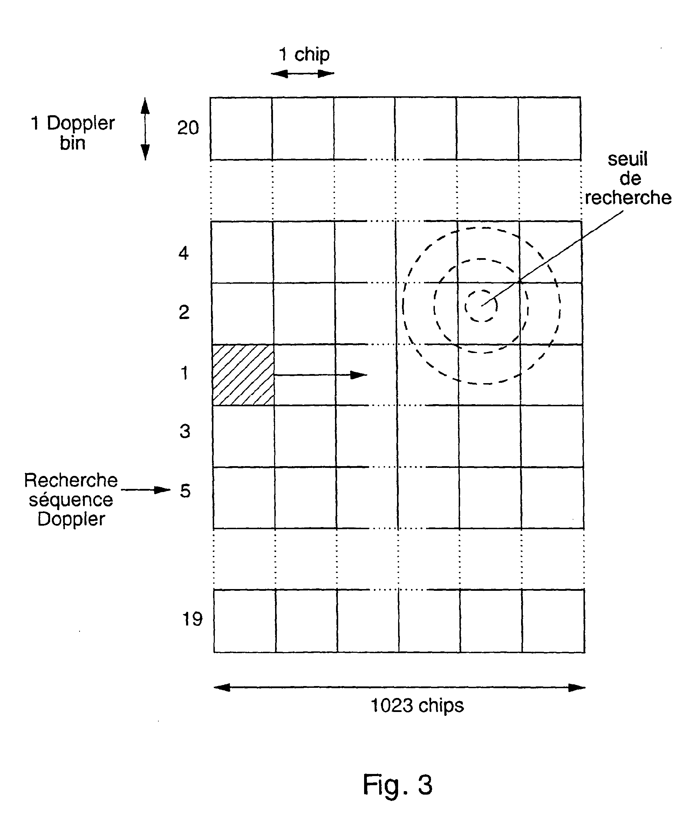

Dans une première phase de recherche d'un satellite, les paramètres de fréquence sont établis et le code PRN est chargé afin que le canal puisse débuter la recherche. Il examine toutes les phases possibles dans une unique fréquence porteuse avec une résolution d'un chip, comme représenté à la figure 3. Lorsque le satellite a été trouvé, le circuit verrouille sur le signal pendant que les fréquences de porteuse et du code générées en interne sont adaptées. Aussi longtemps que la puissance du signal est suffisante, le canal continue la synchronisation des bits et sort les messages GPS.

Pour déterminer la pseudo-distance, l'état du générateur de code PRN est transféré pour chaque canal simultanément, aussi bien que la phase courante du code NCO. Cela permet de retrouver l'information sur la distance qui sépare le récepteur du satellite avec une résolution inférieure à une microseconde.

En plus de la réduction de consommation constatée avec la répartition des tâches logicielles dans l'étage de corrélation, une réduction de consommation supplémentaire peut être accomplie en coupant par période de temps volontairement l'étage RF de l'étage de réception et de mise en forme des signaux 3 tout en gardant actif le procédé de la génération de la réplique du code.

A la sortie vers le microprocesseur depuis l'étage des registres tampons 11, le message GPS à un seul bit est à une fréquence de 50 Hz ce qui permet d'économiser beaucoup d'énergie. Du point de vue du gain obtenu avec cette redistribution des tâches de synchronisation, le transfert de données entre chaque canal de corrélation et le microprocesseur est jusqu'à 3 ordres de grandeur inférieur par rapport aux récepteurs GPS de l'art antérieur, car il n'est plus nécessaire de transférer les énergies et incréments de NCO pour chaque epoch.

L'état du générateur de code PRN et l'état de la phase du NCO, notamment en fin de corrélation, sont placés dans le registre tampon 11 pour pouvoir déterminer la pseudo-distance afin que le microprocesseur puisse en tirer avec au moins quatre satellites la position, la vitesse et le temps.

Dans la configuration qui vient d'être décrite en référence à la figure 1, il est à noter que le corrélateur 8 et le contrôleur 9 sont cadencés par un premier signal d'horloge CLK (4,36 MHz) et par un second signal d'horloge CLK16 (272,5 kHz) pour la majeure partie de l'étage de corrélation. Les boucles d'asservissement d'ajustement des paramètres de fréquence de la porteuse et de phase du C/A code fonctionnent quant à elles avec des signaux numériques de 1 kHz. Cette partie de l'étage de corrélation 7 à 1 kHz est réalisée dans une architecture à bits parallèles ce qui permet le traitement de manière autonome desdits signaux de la boucle par le contrôleur à un taux de fréquence moins important. A la fin de la chaîne de corrélation les signaux GPS reçus à une fréquence de 1,57542 GHz ont été réduits par étapes afin d'être amenés à des signaux d'une fréquence de 50 Hz correspondant au message GPS directement exploitables par le microprocesseur.

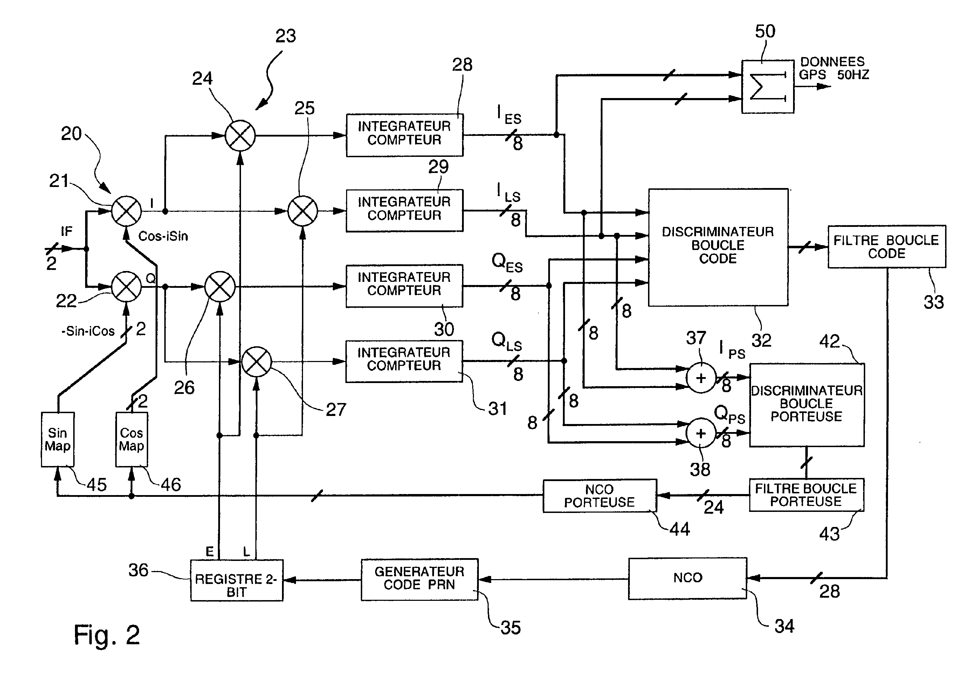

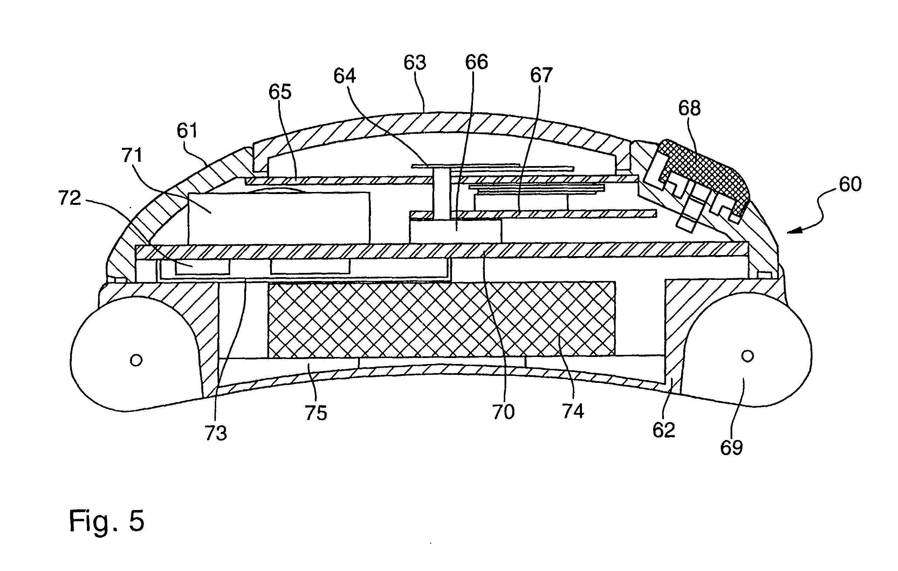

A la figure 2 sont représentés le corrélateur 8 avec une partie pour la boucle d'asservissement du code PRN et une autre partie pour la boucle d'asservissement de la fréquence de la porteuse. Pour plus de détails relatifs aux divers éléments de ce corrélateur, le lecteur se reportera à l'enseignement tiré du chapitre 5 du livre « Understanding GPS Principles and Applications » rédigé par Phillip Ward et de l'éditeur Elliott D. Kaplan, et notamment les figures 5.8 et 5.13 qui représentent en grandes lignes tous les éléments de la figure 2 de la présente invention.

Dans la présente invention, la composante ponctuelle a été éliminée de la boucle d'asservissement du code par mesure d'économie de consommation, mais une perte du rapport signal sur bruit est constatée qui est de l'ordre de 2,5 dB.

En référence à la figure 2, le signal intermédiaire IF, représenté sur la figure par une ligne en gras coupée d'une barre oblique définissant 2 bits, est un signal complexe (I + iQ) composé d'un signal en phase I à 1 bit et d'un signal en quadrature Q à 1 bit. Ledit signal intermédiaire IF a été échantillonné et quantifié, et est passé d'abord par un étage multiplicateur 20 de la porteuse. Un multiplicateur 21 multiplie le signal IF par le Cosinus moins i fois le Sinus de la réplique de la porteuse générée en interne afin de tirer du signal complexe le signal en phase I, tandis qu'un multiplicateur 22 multiplie le signal IF par le moins Sinus moins i fois le Cosinus de la réplique de la porteuse générée en interne afin de tirer du signal complexe le signal en quadrature Q.

Il s'agit après cette opération de trouver l'équivalence du C/A code du signal d'un satellite à acquérir dans un canal enclenché avec un C/A code généré dans ledit canal correspondant au satellite souhaité. Pour cela les signaux en phase et en quadrature passe par un second étage de multiplicateurs 23 pour corréler les signaux I et Q avec une réplique en avance et une réplique en retard du C/A code pour obtenir quatre signaux de corrélation. Dans chaque canal de l'étage de corrélation, il n'a été gardé que la réplique en avance et en retard au lieu des trois répliques normalement sans tenir compte de la réplique ponctuelle. Cela permet de minimiser le nombre d'éléments de corrélation.

Le multiplicateur 24 reçoit le signal I et le signal de réplique en avance E (du terme anglais « early ») d'un registre à 2 bits 36 et fournit un signal corrélé en phase en avance. Le multiplicateur 25 reçoit le signal I et le signal de réplique en retard L (du terme anglais « late ») du registre 36 et fournit un signal corrélé en phase en retard. Le multiplicateur 26 reçoit le signal en quadrature Q et le signal en avance E, et fournit un signal corrélé en quadrature en avance. Enfin, le multiplicateur 27 reçoit le signal Q et le signal de réplique en retard L, et fournit un signal corrélé en quadrature en retard. L'écart entre la réplique en avance E et la réplique en retard L est d'un chip dans la réalisation de la présente invention, ce qui fait que l'écart avec une composante centrale ponctuelle P est de ½ chip. Les multiplicateurs peuvent être réalisés par simplification à l'aide de portes logiques EX-NOR par exemple.

Concernant les signaux en avance et en retard d'un chip d'écart, ils sont utilisés afin de capturer la pointe d'énergie détectée lors de l'acquisition du satellite, ce qui rend l'utilisation des signaux ponctuels superflue, avec comme but d'éviter toute consommation inutile dans le récepteur GPS basse puissance. Néanmoins, l'emploi de ces composantes en avance et en retard suffit à l'acquisition du satellite.

Les quatre signaux corrélés entrent chacun dans un des intégrateurs compteurs 28, 29, 30, 31, qui sont des éléments de pré-détection, dont les valeurs de sorties I_{ES}, I_{LS}, Q_{ES} et Q_{LS} sont représentées à 10 bits ce qui signifie qu'il a fallu un cycle complet du C/A code pour trouver lesdites valeurs. Un jeu complet de valeurs I_{ES}, I_{LS}, Q_{ES} et Q_{LS} est obtenu chaque milliseconde ou chaque epoch. Toutes les opérations dans les boucles qui suivent ces intégrateurs se font dans une architecture à bits parallèles avec des signaux à une fréquence de 1 kHz. Pour éliminer une partie du bruit du signal utile à démoduler, uniquement les 8 bits de poids forts sont utilisés pour la suite de la chaîne de traitement des signaux numériques.

Les valeurs des signaux I_{ES}, I_{LS}, Q_{ES} et Q_{LS}, représentées sur la figure par une ligne en gras coupée par une barre oblique définissant 8 bits, sont passées dans un discriminateur de boucle de code 32 et dans un filtre de boucle de code 33. Le discriminateur de boucle de code réalise les opérations de calcul de l'énergie des signaux I_{ES}, I_{LS}, Q_{ES} et Q_{LS}. Le discriminateur est non-cohérent du type à blocage de boucle de retard (DLL). Il est constitué notamment par un multiplicateur 8-bit et par un accumulateur 20-bit. Sur ce discriminateur, une correction est amenée de la boucle de la porteuse, car lors de l'émission du signal par le satellite l'effet Doppler se fait sentir non seulement sur la fréquence porteuse, mais également sur le C/A code qui est modulé sur la fréquence porteuse. L'apport de la porteuse dans le discriminateur de boucle de code correspond à une division par 1540 de l'incrément d'écart de la porteuse.

Suivant le résultat filtré du discriminateur, un incrément de phase est imposé par le NCO 28-bit au générateur de code PRN 35 afin qu'il transmette la série de bits du C/A code PRN au registre 36 pour faire une nouvelle corrélation. La résolution de fréquence de ce NCO 28-bit est de l'ordre de 16 mHz. (pour une fréquence d'horloge de 4,4 MHz).

Les divers résultats de la boucle sont traités par le contrôleur afin qu'il coordonne les opérations d'acquisition et de poursuite. Une fois, qu'il y a synchronisation et verrouillage sur le satellite souhaité les valeurs I_{ES} et I_{LS} sont introduites dans un élément de démodulation 50 capable de fournir le message de données à 50 Hz sur 1 bit par l'intermédiaire du registre d'entrée et de sortie de données au microprocesseur. En plus du message, le microprocesseur peut prendre notamment les informations concernant les pseudo-distances insérées dans le registre tampon afin de calculer la position X,Y et Z, la vitesse et l'heure locale précise.

Dans la boucle d'asservissement, un détecteur d'arrêts multiples (Multiple Dwell Detector) modifié non représenté a été implanté dans chaque canal afin de garantir une bonne réduction de temps de synchronisation pour diminuer la consommation du récepteur. Le temps de pré-détection des intégrateurs reste par contre constant à 1 ms. Dans ce détecteur, à la fin de la première détection, un seuil d'énergie est soustrait à la sortie du détecteur d'énergie. Si le résultat de cette soustraction est plus petit que 0, cela signifie qu'il y a un manque d'énergie. Dans le cas contraire, une seconde détection peut commencer. Le seuil d'énergie est à nouveau soustrait à l'addition de la nouvelle sortie du détecteur d'énergie avec le résultat de la précédente opération. Ces opérations sont répétées N fois jusqu'à ce que le signal soit déclaré présent. Dès cet instant le procédé de poursuite peut débuter. Ce détecteur permet donc d'accélérer l'acquisition du signal du satellite.

Tous les éléments expliqués ci-dessus ne seront pas décrits de manière plus détaillée, étant donné qu'ils font partie des connaissances générales d'un homme du métier dans ce domaine technique.

En référence à la figure 2, le signal IF est multiplié par le Cosinus moins i fois le Sinus de la réplique de la porteuse générée en interne dans le multiplicateur 21 et par le moins Sinus moins i fois le Cosinus de la réplique de la porteuse générée en interne dans le multiplicateur 22. Ces signaux (Cos-iSin) et (-Sin-iCos) proviennent respectivement d'un bloc 45 et d'un bloc 46 d'une table du signal de la réplique. Le but est de retirer en définitive la fréquence porteuse des signaux portant le message GPS.

La somme des signaux I_{ES} et I_{LS} dans l'additionneur 37 est utilisée pour créer le signal I_{PS} et la somme des signaux Q_{ES} et Q_{LS} dans l'additionneur 38 est utilisée pour créer le signal Q_{PS}, tous deux représentés sur 10 bits. Ces valeurs sont introduites à une fréquence de 1 kHz dans un discriminateur de boucle de porteuse 42 (détection d'enveloppe) pour calculer l'énergie des signaux suivi d'un filtre de boucle de porteuse 43. Le discriminateur est composé notamment d'un multiplicateur 8-bit et d'un accumulateur 20-bit. Il est du type à blocage de boucle de fréquence et de phase.

Une opération de moyenne sur le discriminateur de fréquence est réalisée afin d'accroître la robustesse et la précision des boucles de poursuite de la porteuse. L'accumulation prévue dans le discriminateur dure 16 cycles, ce qui correspond à 16 ms.

Suivant le résultat du discriminateur et après passage à travers le filtre, le NCO 24-bit de la porteuse 44 reçoit un incrément de fréquence (bin) pour la correction de la réplique de la fréquence porteuse. Ce NCO 24-bit a une résolution de fréquence de l'ordre de 260 mHz.

Les deux procédés d'asservissement du code et de la porteuse sont synchronisés durant la poursuite, ceci bien que les boucles de poursuite de la porteuse sont seulement mises à jour après une confirmation de la présence du signal du satellite.

Il est encore à noter en référence à la figure 2 que l'oscillateur à commande numérique défini par NCO devrait être suffisamment large pour avoir une petite résolution de fréquence, mais l'accumulation de phase dans ces larges NCO consomme beaucoup d'énergie ce qui va à l'encontre de la réalisation d'un récepteur GPS basse puissance. Plusieurs agencements de NCO peuvent être prévus afin de réduire au maximum leur consommation, car il constitue une part importante de la consommation du récepteur avec les intégrateurs.

A la figure 3 est représenté un graphique du procédé d'établissement de réplique du signal à 2 dimensions montrant les incréments en phase et en fréquence dans les boucles d'asservissement pour le code et la porteuse. Cela permet d'une part de retrouver la phase du C/A code et d'autre part la fréquence porteuse modifiée par l'effet Doppler pour supprimer les résidus de cette fréquence par corrélation à l'entrée de l'étage de corrélation.

Il faut savoir que lors de l'émission des signaux radiofréquences par un satellite, l'effet Doppler a une influence sur lesdits signaux aussi bien sur la fréquence porteuse que sur le C/A code, ce qui fait que les boucles d'asservissement du code et de la porteuse sont reliées l'une à l'autre pour obtenir une meilleure précision d'ajustement de la phase du code PRN et de la fréquence porteuse reçue au récepteur.

Les algorithmes d'acquisition et de poursuite requiert la réplique de la fréquence porteuse du satellite pour la démodulation. Le retrait de l'effet Doppler qui peut causer des erreurs en fréquence entre ± 4,5 kHz inhérent à toutes émissions de signaux radiofréquences des satellites en mouvement peut être éliminé en adaptant soit la phase soit la fréquence du signal entrant dans le récepteur.

D'autres erreurs dues à l'imprécision de l'oscillateur interne ou aux effets de la ionosphère s'ajoutent aux erreurs dues uniquement à l'effet Doppler. En règle générale, on peut compter jusqu'à un écart de fréquence d'environ ± 7,5 kHz. Ces erreurs peuvent bien entendu être corrigées dans la boucle de code et dans la boucle de la porteuse lors de la phase d'acquisition et de poursuite.

A chaque epoch de corrélation, la phase du code PRN est retardée par pas de 1 chip. Ceci permet de décaler dans le temps le code afin de trouver l'écart de phase du satellite. Une fois que le satellite a été trouvé, il s'agit de corriger la fréquence porteuse comprenant les effets Doppler ce qui se fait dans une boucle d'asservissement de la porteuse. Comme la différence entre la fréquence de la porteuse reçue et la fréquence de la porteuse générée est limitée à plus ou moins 250 Hz, plusieurs recherches à différentes fréquences de la porteuse générée peuvent être nécessaires. Dans le pire des cas, jusqu'à 20 recherches pour la correction de la fréquence dans le NCO de la porteuse sont nécessaires.

Une relation entre les boucles d'asservissement du code et de la porteuse est établie, car lors de l'émission des signaux radiofréquences l'effet Doppler agit aussi bien sur la fréquence porteuse que sur le C/A code, comme expliqué ci-dessus.

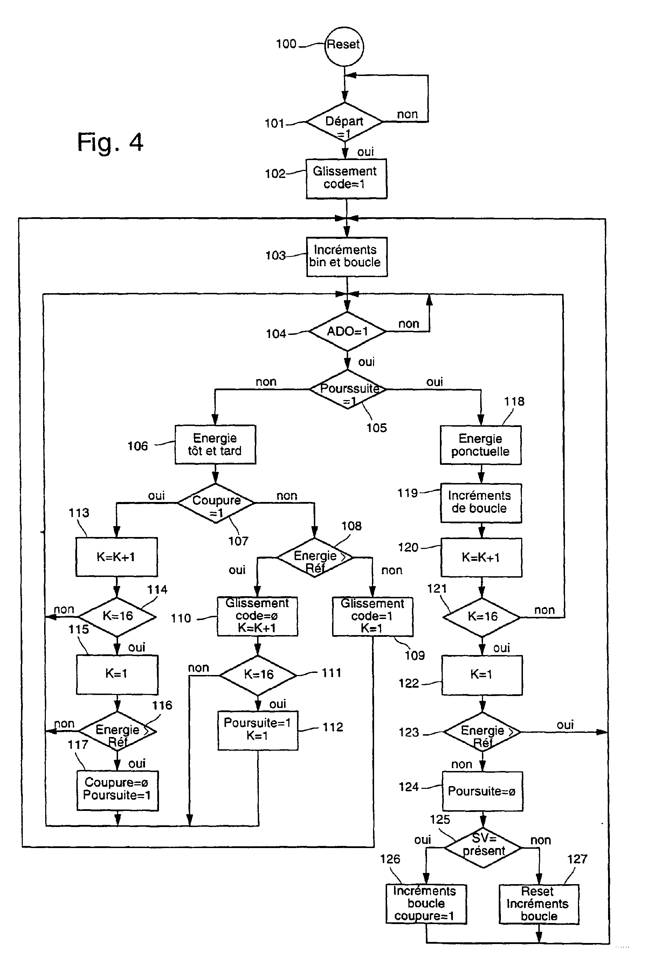

En figure 4 est représenté un organigramme des algorithmes d'acquisition et de poursuite du signal du satellite dans l'étage de corrélation. Ces algorithmes constituent les caractéristiques les plus importantes du récepteur GPS. Ces algorithmes sont implantés dans le contrôleur dans une structure en logique câblée où l'unité de commande du corrélateur génère une séquence de signaux de commande au corrélateur lorsque des transferts de données doivent apparaître dans l'unité à mémoires et l'unité arithmétique. Des informations sont tirées de l'unité à mémoires qui est responsable des opérations de l'unité arithmétique et stocke également les résultats de calcul ou des valeurs de la chaîne des boucles dans les modes d'acquisition et de poursuite. Les registres tampons stockent des valeurs établies lors de l'asservissement des diverses parties du canal.

Des paramètres d'initialisation sont placés dans le registre tampon afin de pouvoir être lus par le contrôleur du canal qui est sélectionné pour le lancement des phase d'acquisition et de poursuite. Dans ce registre sont également placés différents paramètres ou informations du corrélateur ou du contrôleur pour pouvoir être lus par le microprocesseur.

L'état des valeurs ou des paramètres des signaux accumulés dans les boucles d'asservissement sont traités par le contrôleur qui est cadencé en grande partie par une fréquence d'horloge CLK16 (272,5 kHz).

Après 1 ms, c'est-à-dire 1 epoch, les intégrateurs compteurs fournissent les valeurs I_{ES}, I_{LS}, Q_{ES} et Q_{LS}, ainsi que les valeurs I_{PS} et Q_{PS}, qui sont des valeurs à 10 bits ce qui correspond bien à une accumulation pendant 1 ms, étant donné que le C/A code est composé de 1023 bits sur une période de 1 ms.

En se reportant à la figure 4, après avoir mis à zéro à l'étape 100 toutes les données stockées au préalable dans le contrôleur ou dans le corrélateur ou dans le registre tampon, une instruction de départ 101 est ordonnée. Une suppression des incréments des boucles 102 est opérée et une instruction de chargement du numéro du code PRN et d'établissement des paramètres de fréquence est réalisée. Le canal peut débuter par l'acquisition du signal du satellite à chercher. Les incréments de fréquence ou de phase 103 sont écrits dans le NCO correspondant.

Ensuite, l'algorithme entre dans un mode au repos dans l'attente d'une interruption de l'intégrateur compteur de pré-détection. L'interruption correspond à la fourniture dans la période de 1 ms d'une première série de valeurs I_{ES}, I_{LS}, Q_{ES} et Q_{LS} accumulée (ADO) des signaux corrélés dans la boucle d'asservissement du code qui sont fournis par l'intégrateur compteur 104. Tant que l'intégrateur compteur n'a pas terminé son comptage, c'est-à-dire tant que ADO n'est pas égal à 1, il continue son intégration.

Suite à cette première série de valeurs, comme décrit en référence à la figure 3, l'acquisition du satellite doit d'abord être réalisée. Tant qu'on ne se trouve pas dans le mode de poursuite 105, c'est-à-dire tant que l'instruction poursuite n'est pas égale à 1, on entre dans la boucle d'acquisition en cherchant la phase du C/A code. Un calcul de l'énergie 106 des quatre valeurs en phase et en quadrature I_{ES}, I_{LS}, Q_{ES} et Q_{LS} selon les signaux corrélés en retard (tard) et en avance (tôt) s'effectue (détecteur d'énergie). Ce calcul est réalisé par pas à l'aide du contrôleur cadencé par le signal d'horloge CLK16 selon la machine d'états des opérations d'acquisition et de poursuite.

Comme il est possible qu'il y ait une coupure des signaux radiofréquences par suite d'un obstacle, un contrôle de coupure 107 est opéré. Si l'instruction de coupure est à 0 dans un cas normal de fonctionnement, une comparaison du niveau d'énergie 108 par rapport à une valeur seuil est opéré. Si l'énergie n'est pas suffisante, il y a un retard de phase du C/A code 109 et le nombre K de cycles est remis à 1 pour pouvoir faire une nouvelle corrélation du C/A code généré corrigé avec le signal intermédiaire afin de trouver l'équivalence du C/A code transporté par le signal intermédiaire.

La boucle précédemment décrite se répète au niveau 103 jusqu'à ce que l'énergie des valeurs I_{ES}, I_{LS,} Q_{ES} et Q_{LS} soit plus grande que le seuil référence d'énergie 108. Dans l'affirmative, le satellite a été trouvé ou acquis et il n'y a plus de retard de phase du code 110. Par contre, pour être sûr que le satellite a bien été trouvé et non simplement une erreur due au bruit dans la boucle d'asservissement, le cycle de corrélation et d'intégration des valeurs I_{ES}, I_{LS}, Q_{ES} et Q_{LS} doit se répéter 16 fois. Si le nombre de cycles K à l'étape 111 est différent de 16, la boucle doit se répéter par les étapes 104, 105, 106, 107, 108, 110 et 111. Dès que 16 cycles de 1 ms se sont déroulés et qu'on a pu constaté que la satellite a bien été acquis après une moyenne des 16 valeurs stockées, la confirmation de fin d'acquisition a été accomplie.

Dès la fin d'acquisition, l'instruction de poursuite 112 est mise à 1 et le compteur du nombre de cycles remis à 1.

Lors de l'étape 107, si une coupure de l'étage RF est imposée, c'est-à-dire si l'instruction coupure est égale à 1, une incrémentation du nombre de cycles à l'étape 113 est opérée. Un contrôle du nombre de cycles est fait à l'étape 114. Tant que le nombre de cycles n'est pas égal à 16 les étapes 104, 105, 106, 107, 113 sont répétées. Dès que le nombre de cycles est égal à 16 le compteur du nombre de cycles 115 est mis à 1 et l'énergie calculée des valeurs I_{ES}, I_{LS}, Q_{ES} et Q_{LS} à l'étape 116 est comparée à un seuil d'énergie. Si cette énergie est en-dessous du seuil de référence, les étapes 104, 105, 106, 107, 113, 114, et 115 se répètent jusqu'à avoir l'énergie supérieure au seuil de référence. A l'étape 117, l'instruction de coupure est mise à 0 et l'instruction de poursuite est mise à 1.

Lorsque la présence du satellite a été confirmée, le procédé de poursuite peut débuter.

A la suite de l'étape 112 ou 117 et après avoir passé par l'étape 104, l'instruction de la poursuite 105 étant égale à 1, la boucle de poursuite peut être réalisée. Dans ce cas, un calcul de l'énergie ponctuelle 118 des valeurs en phase et en quadrature I_{PS} et Q_{PS} à la sortie de l'intégrateur se fait dans le discriminateur de boucle de la porteuse (détecteur d'enveloppe). Ce calcul est réalisé par pas à l'aide du contrôleur selon la machine d'états des opérations d'acquisition et de poursuite.

Une détermination des incréments de fréquence de la boucle 119 est réalisée suivie par un incrément d'un cycle du compteur du nombre de cycles K à l'étape 120. A l'étape 121, si le nombre de cycles K de 1 ms n'est pas égal à 16, comme précédemment défini dans la boucle d'asservissement du code, une répétition se fait de l'étape 104 à l'étape 121 jusqu'à ce que le nombre de cycles K soit égal à 16. Dès cet instant le compteur du nombre de cycles K à l'étape 122 est remis à 1, et une comparaison de l'énergie calculée pour les valeurs I_{PS} et Q_{PS} avec un seuil de référence d'énergie 123 est pratiquée. Tant que l'énergie est supérieure au seuil de référence, les étapes de 103 à 123 sont répétées avec à chaque fois un ajustement de la fréquence de la porteuse et du code dans le but de fournir la réplique de la fréquence porteuse du signal intermédiaire pour l'annuler par multiplication comme expliqué en référence à la figure 2.

Les valeurs I_{PS} et Q_{PS} doivent être en-dessous d'un seuil de référence d'énergie afin de pouvoir instruire le contrôleur que la fréquence porteuse avec les effets Doppler notamment a été trouvée. Si l'énergie à l'étape 123 est inférieure au seuil d'énergie, l'instruction de poursuite 124 est mise à 0. Dès cet instant, les données du message GPS ne peuvent plus être démodulées du fait que le niveau de l'énergie est insuffisante.

Dans l'étape 125, un test est fait pour savoir si le satellite avait été détecté auparavant. Dans l'affirmative, il est établi des incréments dans la boucle de coupure (coasting) afin d'essayer de retrouver le satellite perdu. Par contre, si le satellite n'était pas encore détecté, il y a un reset des incréments des boucles 127 et le système continue de chercher un satellite. De l'étape 125 et de l'étape 127, un retour à l'étape 103 est réalisé.

Toutes les opérations de la machine d'états (FSM) réalisées par le canal en phase d'acquisition et de poursuite sont réalisées de manière autonome par la coopération du contrôleur et du corrélateur avec les boucles d'asservissement dans une architecture à bits parallèles. La machine d'états comprend 32 positions de calculs et de stockage de valeurs pour accomplir toutes les procédures lors de l'acquisition et de poursuite d'un satellite.

En référence à la figure 5, le récepteur GPS basse puissance peut équiper une montre-bracelet 60 de tout type. Ladite montre-bracelet 60, qui est dans le cas présent une montre à affichage analogique de l'heure et à affichage numérique d'informations, comprend un boîtier constitué d'une carrure 62 et d'une lunette 61 sur laquelle est placée une glace 63, un cadran 65, des aiguilles 64 d'indication de l'heure ou d'une direction, un micro-moteur pas à pas 66 pour l'avance des aiguilles, un module PCB LCD 67, au moins un bouton-poussoir 68, et des moyens d'attache 69 à un bracelet.

Dans le boîtier de la montre, un récepteur GPS est monté. Ce récepteur GPS est constitué d'une antenne par exemple à micro-ruban 71 pour la réception des signaux radiofréquences de satellites montée sur un circuit imprimé 70 sur lequel sont placés du côté opposé des composants 72 dudit récepteur. Les composants 72 sont protégés par un blindage 73 et sont alimentés par un accumulateur Li-ion 74 positionné sous le circuit imprimé 70 dans la carrure 62. Une bobine de charge de l'accumulateur 75 est placée sur le fond de la carrure pour pouvoir être couplée magnétiquement avec un dispositif externe, non visible sur la figure 5, permettant la charge de l'accumulateur.

Bien entendu d'autres formes de réalisation du récepteur GPS basse puissance aurait pu être décrite à la connaissance de l'homme du métier sans sortir du cadre de l'invention définie par les revendications. Un nombre plus importants de canaux peut être concevable pour autant qu'ils soient composés chacun d'un corrélateur et d'un contrôleur ayant la possibilité de réaliser de manière autonome la synchronisation du canal par un algorithme de traitement des signaux numériques adéquat. Ce canal est conçu dans un matériel dédicacé pour l'acquisition et la poursuite d'un satellite spécifique.

Les signaux intermédiaires ont été décrits comme des signaux complexes comprenant des signaux en phase à 1-bit et en quadrature à 1-bit, mais il peut être concevable de fournir de tels signaux intermédiaires à plusieurs bits.

Les éléments qui composent l'étage de corrélation peuvent subir de multiples modifications pour réduire la consommation du récepteur tout en gardant l'implantation de l'algorithme de traitement des signaux numérique sous forme d'une logique câblée dans chaque canal.

## Revendications

1. Récepteur GPS basse puissance comprenant une antenne (2) de réception de signaux radiofréquences provenant de satellites, un étage de réception et de mise en forme (3) de signaux radiofréquences fournis par l'antenne, un étage de corrélation (7) composé de plusieurs canaux (7') qui comprennent chacun un corrélateur (8), ledit étage de corrélation (7) recevant des signaux intermédiaires (IF) mis en forme par l'étage de réception (3), un microprocesseur (12) relié à l'étage de corrélation et destiné à calculer des données de position en X, Y et Z, de vitesse et temporelles en fonction de données tirées, après corrélation, des signaux GPS émis par les satellites, **caractérisé en ce que**, dans chaque canal, un contrôleur (9), comprenant un algorithme de traitement de signaux numériques, est associé au corrélateur (8) pour permettre lors de la mise en fonction du canal (7') d'opérer de manière autonome toutes les tâches de synchronisation pour la recherche et la poursuite d'un satellite, et **en ce qu'**au moins un ensemble de registres (11) d'entrée et de sortie de données est placé en interface entre l'étage de corrélation (7) et le microprocesseur (12) afin de recevoir des données émises par le microprocesseur à destination de l'étage de corrélation et des données fournies de l'étage de corrélation, lesdites données transitant par l'ensemble de registres étant composées de signaux d'une fréquence inférieure ou égale à la fréquence des signaux de messages GPS pour que le microprocesseur puisse s'occuper des tâches de calcul de la position, de vitesse et de temps sans intervention au niveau des tâches de synchronisation et de corrélation.

2. Récepteur GPS selon la revendication 1, **caractérisé en ce que** les signaux intermédiaires (IF) fournis à l'étage de corrélation (7) sont des signaux complexes qui ont été échantillonnés et quantifiés dans l'étage de réception et de mise en forme (3), ces signaux complexes étant composés d'une composante de signal en phase à 1-bit et d'une composante de signal en quadrature à 1-bit.

3. Récepteur GPS selon la revendication 1, **caractérisé en ce que** le contrôleur agit sur des boucles d'asservissement de la phase du C/A code et de la fréquence porteuse dans une architecture à bits parallèles.

4. Récepteur GPS selon la revendication 1, **caractérisé en ce que** chaque corrélateur (8) est composé d'un premier étage multiplicateur (20) pour multiplier le signal intermédiaire (IF) avec d'une part le cosinus moins i fois le sinus de la réplique de la fréquence porteuse générée numériquement dans l'étage de corrélation et avec d'autre part le moins sinus moins i fois le cosinus de cette réplique de fréquence porteuse pour fournir en sortie un premier signal en phase (I) et un second signal en quadrature (Q), d'un second étage multiplicateur (23) pour corréler le premier signal (I) avec d'une part une réplique en retard du signal de C/A code du satellite générée numériquement dans l'étage de corrélation et avec d'autre part une réplique en avance du signal de C/A code du satellite, et pour corréler le second signal (Q) avec d'une part une réplique en retard du signal de C/A code du satellite et avec d'autre part une réplique en avance du signal de C/A code du satellite, les quatre signaux sortant du deuxième étage multiplicateur (23) étant passés chacun dans un intégrateur compteur respectif (28, 29, 30, 31) pour fournir quatre signaux de code en phase et en quadrature (I_{ES}, I_{LS}, Q_{ES} et Q_{LS}) répartis chacun sur au moins 8 bits dans une boucle de correction de phase du C/A code, et la somme des deux signaux de code en phase (I_{ES} et I_{LS}) ainsi que la somme des deux signaux de code en quadrature (Q_{ES} et Q_{LS}) fournissant deux signaux de porteuse (I_{PS} et Q_{PS}) répartis chacun sur au moins 8 bits dans une boucle de correction de la fréquence porteuse.

5. Récepteur GPS selon la revendication 4, **caractérisé en ce que** les signaux en avance ont un écart de phase d'un chip par rapport aux signaux en retard.

6. Récepteur GPS selon la revendication 4, **caractérisé en ce que** la boucle de correction du code comprend successivement un discriminateur de boucle de code (32), un filtre de boucle de code (33), un oscillateur NCO 28-bit (34), un générateur de C/A code relié à un registre 2-bit délivrant les répliques en avance et en retard au second étage multiplicateur (23).

7. Récepteur GPS selon la revendication 4, **caractérisé en ce que** la boucle de correction de la fréquence porteuse comprend successivement un discriminateur de boucle porteuse (42), un filtre de boucle porteuse (43), un oscillateur NCO 24-bit (44), et deux blocs (45 et 46) pour la fourniture au premier étage multiplicateur (20) du cosinus et du sinus de la réplique de la fréquence porteuse corrigée par l'oscillateur NCO.

8. Récepteur GPS selon la revendication 1, **caractérisé en ce qu'**il comprend 12 canaux avec pour chacun d'eux un corrélateur (8) et un contrôleur (9).

9. Récepteur GPS selon la revendication 1, **caractérisé en ce qu'**une première partie du corrélateur (8) et du contrôleur (9) de chaque canal (7') est cadencée par un premier signal d'horloge (CLK) fourni par un oscillateur à quartz logé dans l'étage de réception et de mise en forme (3), **en ce qu'**une seconde partie du corrélateur et du contrôleur est cadencée par un second signal d'horloge (CLK16), la fréquence du premier signal d'horloge étant 16 fois supérieure à la fréquence du second signal d'horloge.

10. Récepteur GPS selon la revendication 1, **caractérisé en ce qu'**un ensemble de registres (11) est prévu pour chaque canal.

11. Récepteur GPS selon l'une des revendications 1 et 10, **caractérisé en ce que** l'étage de corrélation (7), le ou les ensembles de registres (11) et le microprocesseur (12) sont réalisés dans un unique substrat semi-conducteur.

12. Montre comprenant un récepteur GPS selon l'une des revendications précédentes, **caractérisée en ce que** le récepteur GPS (1) est logé dans le boîtier de la montre et est alimenté par un accumulateur d'énergie ou par une pile servant également à l'alimentation des composants électroniques des fonctions horlogères.

## Claims

1. Low power GPS receiver including an antenna (2) for receiving radio-frequency signals originating from satellites, a reception and shaping stage (3) for the radio-frequency signals provided by the antenna, a correlation stage (7) formed of several channels (7') which each include a correlator (8), said correlation stage (7) receiving intermediate signals (IF) shaped by the reception stage (3), a microprocessor (12) connected to the correlation stage and intended to calculate X, Y and Z position, velocity and time data as a function of data extracted, after correlation, from the radio-frequency signals transmitted by the satellites, **characterized in that**, in each channel, a controller (9), including a digital signal processing algorithm, is associated with the correlator (8) to allow all the synchronisation tasks to be performed autonomously for acquiring and tracking a satellite when the channel (7') is set in operation, and **in that** at least a set of data input and output registers (11) is placed at the interface between the correlation stage (7) and the microprocessor (12) in order to receive data transmitted by the microprocessor to the correlation stage and data supplied from the correlation stage, said data passing through the set of registers being formed of signals of a frequency lower than or equal to the frequency of the message signals, so that the microprocessor can perform the tasks of calculating the position, velocity and time without any intervention as regards the synchronisation and correlation tasks.

2. GPS receiver according to claim 1, **characterized in that** the intermediate signals (IF) provided to the correlation stage (7) are complex signals which have been sampled and quantified in the reception and shaping stage (3), these complex signals being formed of a 1-bit in-phase signal component and a 1-bit quarter-phase signal component.

3. GPS receiver according to claim 1, **characterized in that** the controller acts on control loops of the C/A code phase and the carrier frequency in a bit-parallel architecture.

4. GPS receiver according to claim 1, **characterized in that** each correlator (8) is formed of a first multiplier stage (20) for multiplying the intermediate signals (IF) with on the one hand the cosine minus i times the sine of the replica of the carrier frequency generated digitally in the correlation stage and with on the other hand the minus sine minus i times the cosine of this carrier frequency replica to provide at output a first in-phase signal (I) and a second quarter-phase signal (Q), of a second multiplier stage (23) for correlating the first signal (I) with on the one hand a late replica of the satellite C/A code signal digitally generated in the correlation stage and with on the other hand an early replica of the satellite C/A code signal and to correlate the second signal (Q) with on the one hand a late replica of the satellite C/A code signal and on the other hand an early replica of the satellite C/A code signal, the four signals leaving the second multiplier stage (23) being each passed into a respective integrator counter (28, 29, 30, 31) to provide four in-phase and quarter-phase code signals (I_{ES}, I_{LS}, Q_{ES} and Q_{LS}) each distributed over at least 8 bits in a C/A code phase correction loop, and the sum of the two in-phase code signals (I_{ES} and I_{LS}) and the sum of the two quarter-phase code signals (Q_{ES} and Q_{LS}) providing two carrier signals (I_{PS} and Q_{PS}) each distributed over at least 8 bits in a carrier frequency correction loop.

5. GPS receiver according to claim 4, **characterized in that** the early signals have a phase offset of a half chip with respect to the late signals.

6. GPS receiver according to claim 4, **characterized in that** the code correction loop includes in succession a code loop discriminator (32), a code loop filter (33), a 28-bit NCO oscillator (34), a C/A code generator connected to a 2-bit register supplying the early and late replicas to the second multiplier stage (23).

7. GPS receiver according to claim 4, **characterized in that** the carrier frequency correction loop includes in succession a carrier loop discriminator (42), a carrier loop filter (43), a 24-bit NCO oscillator (44) and two units (45 and 46) for providing to the first multiplier stage (20) of the cosine and the sine of the replica of the carrier frequency corrected by the NCO oscillator.

8. GPS receiver according to claim 1, **characterized in that** it includes 12 channels with a correlator (8) and a controller (9) for each of them.

9. GPS receiver according to claim 1, **characterized in that** a first part of the correlator (8) and the controller (9) of each channel (7') is clocked by a first clock signal (CLK) provided by a quartz oscillator housed in the reception and shaping stage (3), and **in that** a second part of the correlator and the controller is clocked by a second clock signal (CLK16), the frequency of the first clock signal being 16 times greater than the frequency of the second clock signal.

10. GPS receiver according to claim 1, **characterized in that** a set of registers (11) is provided for each channel.

11. GPS receiver according to one of claims 1 and 10, **characterized in that** the correlation stage (7), the set or sets of registers (11) and the microprocessor (12) are made in a single semiconductor substrate.

12. Watch including a GPS receiver according to any of the preceding claims, **characterized in that** the GPS receiver (1) is housed in the case of the watch and is powered by an energy accumulator or a battery also used for powering the electronic components for the horological functions.

## Patentansprüche

1. GPS-Empfänger mit niedriger Leistung, der eine Antenne (2) zum Empfangen von von Satelliten ausgehenden Hochfrequenzsignalen, eine Empfangs- und Formungsstufe (3) für von der Antenne gelieferte Hochfrequenzsignale, eine Korrelationsstufe (7), die aus mehreren Kanälen (7') zusammengesetzt ist, die jeweils einen Korrelator (8) enthalten, wobei die Korrelationsstufe (7) Zwischensignale (IF) empfängt, die von der Empfangsstufe (3) geformt sind, und einen Mikroprozessor (12), der mit der Korrelationsstufe verbunden ist und dazu bestimmt ist, X-, Y- und Z-Positionsdaten, Geschwindigkeitsdaten und Zeitdaten in Abhängigkeit von Daten, die nach der Korrelation aus den von den Satelliten gesendeten GPS-Signalen entnommen werden, zu berechnen, umfasst, **dadurch gekennzeichnet, dass** in jedem Kanal dem Korrelator (8) eine Steuereinheit (9), die einen Algorithmus für die Verarbeitung digitaler Signale enthält, zugeordnet ist, um bei der Inbetriebnahme des Kanals (7') zu ermöglichen, sämtliche Synchronisationsaufgaben für die Suche und die Verfolgung eines Satelliten autonom abzuarbeiten, und dass wenigstens eine Gruppe von Dateneingangs- und Datenausgangsregistern (11) an der Grenze zwischen der Korrelationsstufe (7) und dem Mikroprozessor (12) angeordnet ist, um sowohl von dem Mikroprozessor ausgesendete und für die Korrelationsstufe bestimmte Daten als auch von der Korrelationsstufe gelieferte Daten zu empfangen, wobei die Daten, die durch die Registergruppe laufen, aus Signalen mit einer Frequenz, die kleiner oder gleich der Frequenz der GPS-Nachrichtensignale ist, zusammengesetzt sind, damit der Prozessor die Positions-, Geschwindigkeits- und Zeit-Berechnungsaufgaben ohne Eingriff auf Höhe der Synchronisations- und Korrelationsaufgaben ausführen kann.

2. GPS-Empfänger nach Anspruch 1, **dadurch gekennzeichnet, dass** die Zwischensignale (IF), die zu der Korrelationsstufe (7) geliefert werden, komplexe Signale sind, die in der Empfangs- und Formungsstufe (3) abgetastet und quantifiziert worden sind, wobei diese komplexen Signale aus einer phasengleichen 1-Bit-Signalkomponente und aus einer Quadratur-1-Bit-Signalkomponente gebildet sind.

3. GPS-Empfänger nach Anspruch 1, **dadurch gekennzeichnet, dass** die Steuereinrichtung auf Regelungsschleifen der Phase des C/A-Codes und der Trägerfrequenz in einer Parallelbit-Architektur einwirkt.

4. GPS-Empfänger nach Anspruch 1, **dadurch gekennzeichnet, dass** jeder Korrelator (8) aufgebaut ist aus einer ersten Multipliziererstufe (20) zum Multiplizieren des Zwischensignals (IF) einerseits mit dem Kosinus minus dem i-fachen Sinus der Kopie der in der Korrelationstufe digital erzeugten Trägerfrequenz und andererseits mit dem negativen Sinus minus dem i-fachen Kosinus dieser Kopie der Trägerfrequenz, um am Ausgang ein erstes, phasengleiches Signal (I) und ein zweites Quadratursignal (Q) zu liefern, und aus einer zweiten Multipliziererstufe (23) zum Korrelieren des ersten Signals (I) einerseits mit einer nacheilenden Kopie des C/A-Code-Signals des Satelliten, das in der Korrelationsstufe digital erzeugt wird, und andererseits mit einer voreilenden Kopie des C/A-Code-Signals des Satelliten und zum Korrelieren des zweiten Signals (Q) einerseits mit einer nacheilenden Kopie des C/A-Code-Signals des Satelliten und andererseits mit einer voreilenden Kopie des C/A-Code-Signals des Satelliten, wobei die vier Signale, die die zweite Multipliziererstufe (23) verlassen, jeweils in einen entsprechenden Zähler-Integrator (28, 29, 30, 31) geschickt werden, um vier Codesignale, die in Phase bzw. um 90° phasenverschoben sind (I_{ES}, I_{LS}, Q_{ES} und Q_{LS}), die jeweils auf wenigstens 8 Bit in einer Phasenkorrekturschleife des C/A-Codes verteilt sind, und die Summe der zwei phasengleichen Codesignale (I_{ES} und I_{LS}) sowie die Summe der zwei um 90° phasenverschobenen Codesignale (Q_{ES} und Q_{LS}) zu liefern, was zwei Trägersignale (I_{PS} und Q_{PS}) ergibt, die jeweils auf wenigstens 8 Bit in einer Trägerfrequenz-Korrekturschleife verteilt sind.

5. GPS-Empfänger nach Anspruch 4, **dadurch gekennzeichnet, dass** die voreilenden Signale einen Phasenabstand von einem Chip in Bezug auf die nacheilenden Signale haben.

6. GPS-Empfänger nach Anspruch 4, **dadurch gekennzeichnet, dass** die Code-Korrekturschleife nacheinander einen Codeschleifen-Diskriminator (32), ein Codeschleifen-Filter (33), einen 28-Bit-NCO-Oszillator (34) und einen C/A-CodeGenerator, der mit einem 2-Bit-Register verbunden ist und die voreilende und die nacheilende Kopie an die zweite Multipliziererstufe (23) liefert, umfasst.

7. GPS-Empfänger nach Anspruch 4, **dadurch gekennzeichnet, dass** die Trägerfrequenz-Korrekturschleife nacheinander einen Trägerschleifen-Diskriminator (42), ein Trägerschleifen-Filter (43), einen 24-Bit-NCO-Oszillator (44) und zwei Blöcke (45 und 46) zum Liefern des Kosinus und des Sinus der durch den NCO-Oszillator korrigierten Kopie der Trägerfrequenz an die erste Multipliziererstufe (20) umfasst.

8. GPS-Empfänger nach Anspruch 1, **dadurch gekennzeichnet, dass** er 12 Kanäle mit jeweils einem Korrelator (8) und einer Steuereinrichtung (9) umfasst.

9. GPS-Empfänger nach Anspruch 1, **dadurch gekennzeichnet, dass** ein erster Teil des Korrelators (8) und der Steuereinrichtung (9) jedes Kanals (7') durch ein erstes Taktsignal (CLK) getaktet wird, das von einem Quarz-Oszillator geliefert wird, der in der Empfangs- und Formungsstufe (3) untergebracht ist, und dass ein zweiter Teil des Korrelators und der Steuereinrichtung durch ein zweites Taktsignal (CLK16) getaktet wird, wobei die Frequenz des ersten Taktsignals 16 mal größer als die Frequenz des zweiten Taktsignals ist.

10. GPS-Empfänger nach Anspruch 1, **dadurch gekennzeichnet, dass** für jeden Kanal eine Gruppe von Registern (11) vorgesehen ist.

11. GPS-Empfänger nach einem der Ansprüche 1 und 10, **dadurch gekennzeichnet, dass** die Korrelationsstufe (7), die Registergruppe(n) (11) und der Mikroprozessor (12) in einem einzigen Halbleitersubstrat verwirklicht sind.

12. Uhr, die einen GPS-Empfänger nach einem der vorhergehenden Ansprüche enthält, **dadurch gekennzeichnet, dass** der GPS-Empfänger (1) in dem Gehäuse der Uhr untergebracht ist und von einem Energieakkumulator oder von einer Batteriezelle, der bzw. die außerdem der Versorgung der elektronischen Komponenten für die Zeitmessfunktionen dient, versorgt wird.
